# EUROPÄISCHE PATENTSCHRIFT

(11) **EP 0 640 555 B1**
(45) Veröffentlichungstag und Bekanntmachung des Hinweises auf die Patenterteilung: **18.09.1996**
(21) Anmeldenummer: 94108837.9
(22) Anmeldetag: 09.06.1994
(51) Int. Cl.: B67C 3/26

(54) **Vorrichtung zum Füllen von Gefässen mit einer Flüssigkeit**
Device for filling containers with a liquid
Dispositif pour remplir des récipients avec un liquide

(30) Priorität: 31.07.1993 DE 9311427 U
(43) Veröffentlichungstag der Anmeldung: 01.03.1995
(73) Patentinhaber: KRONES AG Hermann Kronseder Maschinenfabrik, D-93068 Neutraubling (DE)
(72) Erfinder: Weiss, Wilhelm, D-93138 Lappersdorf (DE)

(56) Entgegenhaltungen:
- EP-A- 0 237 823
- EP-A- 0 458 093
- DE-A- 3 446 500
- DE-A- 3 725 610
- FR-A- 2 603 573

## Beschreibung

Die Erfindung betrifft eine Vorrichtung zum Füllen von Gefäßen mit einer Flüssigkeit gemäß dem Oberbegriff des Anspruchs 1.

Es ist bereits eine derartige Vorrichtung bekannt, bei welcher der Füllstutzen seitlich neben dem Vorratsbehälter sitzt und an eine Öffnung in dessen Seitenwand angeschlossen ist (EP-A-0 458 093). Der Ventilkörper des Flüssigkeitsventils, das diesen durchdringende Gasrohr sowie die im Gasrohr sitzende elektrische Füllstandssonde sind in einem eigenen, seitlich neben dem Vorratsbehälter angeordneten rohrartigen Gehäuse aufgenommen. Zwar kann so das Anschlußkabel für die elektrische Füllstandssonde an der Oberseite des zusätzlichen Gehäuses entfernt vom Naßbereich und damit geschützt gegen Flüssigkeitseinwirkungen herausgeführt werden; jedoch erfordert diese Bauweise einen enormen Fertigungs- und Materialaufwand. Außerdem bewirkt die mehrmalige starke Umlenkung der Flüssigkeit zwischen dem Vorratsbehälter und dem Füllstutzen einen erhöhten Strömungswiderstand und damit eine Beeinträchtigung der Fülleistung.

Durch die DE-A-34 46 500 ist bereits eine Vorrichtung zum Füllen von Gefäßen mit einer Flüssigkeit bekannt, bei der ein Füllstutzen an der Unterseite des Vorratsbehälters angeordnet und das Gasrohr mit einer den Innenraum des Vorratsbehälters und dessen Deckel durchdringenden Verlängerung versehen ist. Auf die Verlängerung wirkt ein Stellorgan ein, mit dem das Gasrohr, das unabhängig vom Ventilkörper des Flüssigkeitsventils höhenbeweglich ist, in axialer Richtung verschoben werden kann. Die Bestimmung der Füllhöhe erfolgt bei dieser bekannten Vorrichtung durch die untere Öffnung des Gasrohres; eine elektrische Füllstandssonde ist nicht vorhanden. Es ist daher im Bereich des Flüssigkeitsventils eine strömungstechnisch ungünstige Nachlaufsperre für die Flüssigkeit in Form eines Syphons mit einer Sperrglocke erforderlich. Diese bekannte Vorrichtung ist hinsichtlich Leistung und Füllgenauigkeit nicht befriedigend; der mechanische Aufbau ist kompliziert und kostspielig.

Der Erfindung liegt die Aufgabe zugrunde, bei einer Vorrichtung zum Füllen von Gefäßen der eingangs genannten Art die Fülleistung und die Funktionssicherheit zu erhöhen und die Ausbaufähigkeit zu verbessern.

Diese Aufgabe wird erfindungsgemäß durch die im Kennzeichen des Anspruchs 1 angegebenen Merkmale gelöst.

Bei der erfindungsgemäßen Vorrichtung können die elektrischen Anschlüsse für die Füllstandssonde, die Gasanschlüsse für das Gasrohr und das Stellorgan für das Flüssigkeitsventil ohne Raumprobleme im geschützten Bereich an der Oberseite des Vorratsbehälters angeordnet werden. Die dies bewirkende Verlängerung des Gasrohres und der Füllstandssonde bzw. des Anschlußkabels verursacht nur wenig zusätzlichen Aufwand und wird durch den Wegfall des separaten rohrförmigen Gehäuses mehr als ausgeglichen. Durch den Wegfall des Gehäuses bzw. durch den Anschluß des Füllstutzens über eine Öffnung im Boden des Vorratsbehälters ergibt sich außerdem ein äußerst widerstandsarmer Strömungsweg für die Flüssigkeit, die ohne nennenswerte Umlenkung nahezu senkrecht vom Vorratsbehälter durch dessen Bodenöffnung, die anschließende Bohrung und den Füllstutzen in das Gefäß einströmen kann. Es ist daher eine sehr hohe Abfülleistung möglich. Eine Reduzierung der Fertigungskosten und des Strömungswiderstands wird auch dadurch erzielt, daß das Gasrohr zur Betätigung des Flüssigkeitsventils herangezogen wird. Dabei kann die Füllstandssonde fest mit dem Gasrohr verbunden werden, so daß sie dessen Höhenbewegung bei Betätigung des Flüssigkeitsventil mitmacht; sie kann jedoch auch ortsfest gehalten und gegenüber dem Gasrohr gasdicht und beweglich geführt werden.

Vorteilhafte Weiterbildungen der Erfindung sind in den Unteransprüchen angegeben.

Die Ausführungen nach den Ansprüchen 2 und 3 ermöglichen eine besonders exakte und einfache Fertigung und Montage.

Die Ausführungen nach den Ansprüchen 4 bis 9 sind besonders dann zu empfehlen, wenn empfindliche, CO₂-haltige Getränke unter Überdruck und/oder sterilen Bedingungen abgefüllt werden sollen. Diese Ausführungen ermöglichen eine einfache Anpassung an alle praktischen Abfüllbedingungen.

Die Ausführungen nach den Ansprüchen 10 bis 12 ergeben besonders günstige Strömungsverhältnisse und dadurch besonders hohe Abfülleistungen. Sie nutzen die Verlagerung des Anschlusses für die Füllstandssonde, des Stellorgans für das Flüssigkeitsventil sowie der Gasventile an die Oberseite des Flüssigkeitsbehälters optimal aus.

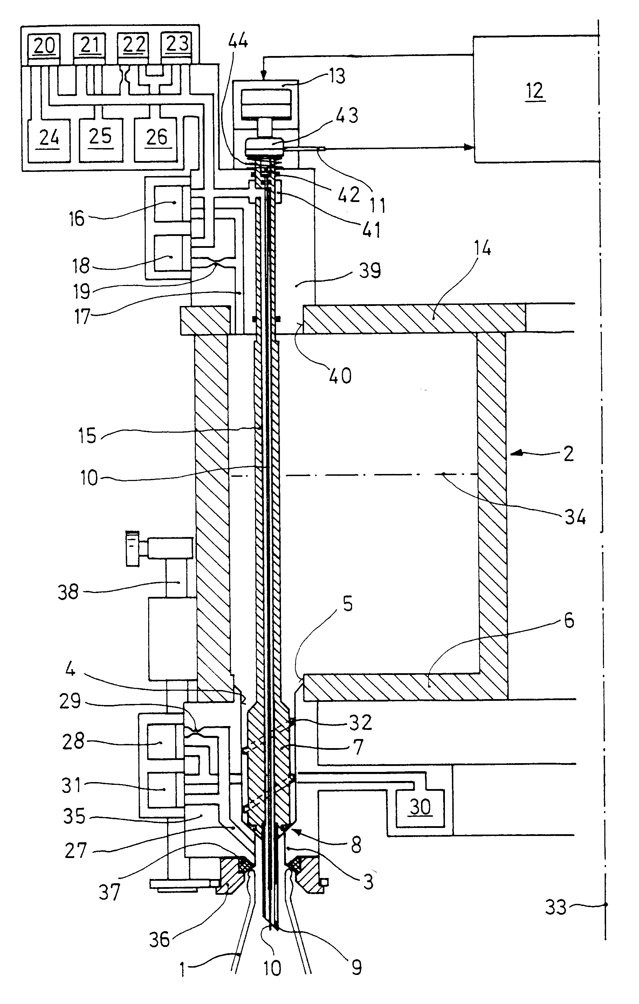

Im Nachstehenden wird ein Ausführungsbeispiel der Erfindung anhand der Zeichnung beschrieben. Dies zeigt einen senkrechten Schnitt durch eine Vorrichtung zum Füllen von Gefäßen, teilweise in schematischer Darstellung.

Die in der Zeichnung dargestellte Vorrichtung ist zum Füllen von Flaschen 1 mit einem kohlensäurehaltigen Getränk, z.B. Bier, unter einem überatmosphärischen Gegendruck eingerichtet. Sie weist einen ringförmigen, geschlossenen Vorratsbehälter 2 mit im wesentlichen rechteckigen Querschnitt auf, der um eine senkrechte Drehachse 33 umläuft. Der Vorratsbehälter 2 ist bis zum Pegel 34 mit dem Getränk und darüber mit einem Spanngas in Form eines hochprozentigen CO₂-Luftgemisches mit einem Überdruck von beispielsweise zwei bar gefüllt. Die Zuführung des Getränks und des Spanngases erfolgt in der üblichen Weise durch nicht gezeigte radiale Rohrleitungen, Drehverteiler usw..

An der Unterseite des Vorratsbehälters 2 sind gleichmäßig über den Umfang verteilt mehrere Ventilblöcke 35 befestigt, an deren Unterseite jeweils ein Füllstutzen 3 mit einer senkrechten, zylindrischen Auslauföffnung ausgebildet ist. Der Füllstutzen 3 geht nach oben hin über eine konische Erweiterung in eine konzentrische, senkrechte Bohrung 4 mit zylindrischer Mantelfläche über. In dieser ist ein Ventilkörper 7 mit gleichfalls zylindrischer Mantelfläche höhenbeweglich angeordnet. Der Ventilkörper 7, dessen Durchmesser kleiner ist als der Durchmesser der Bohrung 4, ist am Umfang mit einer spiraligen Leitfläche 32 für die Flüssigkeit versehen, durch die er außerdem beweglich in der Bohrung 4 zentriert ist. Der Ventilkörper 7 bildet zusammen mit der konischen Übergangsfläche zwischen Füllstutzen 3 und Bohrung 4 ein Flüssigkeitsventil 8. Die nach oben hin völlig offene Bohrung 4 ist über eine kreisförmige Öffnung 5 im Boden 6 des Vorratsbehälters 2 an dessen Innenraum direkt angeschlossen.

Im Ventilblock 35 ist weiter ein schräg nach unten in den Füllstutzen 3 einmündender Kanal 27 ausgebildet, der über eine Drossel 29 und ein Steuerventil 28 an einen ringförmigen Behälter 30 angeschlossen ist. Über ein weiteres Steuerventil 31 ist der Kanal 27 unter Umgehung der Drossel 29 direkt an den Behälter 30 angeschlossen. Dieser kann z.B. im normalen Füllbetrieb mit der Atmosphäre verbunden sein, so daß er beim Entlasten der Flasche 1 am Ende des Füllvorgangs über die Drossel 29 bei geöffnetem Ventil 28 das Spanngas aufnimmt. Im Reinigungsbetrieb kann der Kanal 30 zum Zuführen oder Abführen des Reinigungsmediums dienen, wobei das Steuerventil 31 geöffnet wird. Der Behälter 30 ist konzentrisch zur Drehachse 33 angeordnet und läuft zusammen mit dem Vorratsbehälter 2 um.

Unterhalb des Ventilblocks 35 ist eine Zentrierglocke 36 mit einem Dichtring 37 für die Flaschenmündung vorgesehen, die mittels eines Schlittens 38 höhenbeweglich am Vorratsbehälter 2 gelagert ist. Außerdem ist jedem Ventilblock 35 ein nicht gezeigtes Huborgan zugeordnet, das zusammen mit dem Vorratsbehälter 2 umläuft und in der üblichen Weise unter Zwischenschaltung des Dichtrings 37 die Flasche 1 gas- und flüssigkeitsdicht an den Füllstutzen 3 anpreßt.

An der Unterseite des Ventilkörpers 7 ist ein senkrechtes Gasrohr 9 befestigt, das den Füllstutzen 3 mittig durchdringt, so daß ein ringförmiger Kanal für die auslaufende Flüssigkeit verbleibt. Das Gasrohr 9 ragt nach unten hin aus dem Füllstutzen 3 etwas heraus bzw. in eine an diesen angepreßte Flasche 1 hinein. Nach oben hin schließt sich an das Gasrohr 9 eine senkrechte, rohrartige Verlängerung 15 an, die einstückig mit dem Ventilkörper 7 ausgebildet ist. Die Verlängerung 15 sitzt konzentrisch zum Gasrohr 9 und weist in etwa den gleichen freien Querschnitt auf, so daß die Bohrungen von Gasrohr 9, Ventilkörper 7 und Verlängerung 15 einen durchgehenden Gaskanal bilden.

Die Verlängerung 15 durchdringt höhenmäßig den gesamten Innenraum des Vorratsbehälters 2 und ragt nach oben hin aus diesem bzw. dessen Deckel 14 ein Stück hinaus. Dieser überstehende Bereich der Verlängerung 15 ist in einem Steuerblock 39 höhenbeweglich und gasdicht geführt. Der Steuerblock 39 ist auf dem Deckel 14 des Vorratsbehälters 2 im Bereich einer Öffnung 40 befestigt, die konzentrisch zur Öffnung 5 im Boden 6 angeordnet ist bzw. exakt darüber sitzt.

Im Steuerblock 39 ist eine die Verlängerung 15 ringförmig umgebende Gaskammer 41 ausgebildet, die über eine Querbohrung in der Verlängerung 15 mit deren Innenraum in andauernder Verbindung steht. Ferner ist im Steuerblock 39 eine Spanngasleitung 17 ausgebildet, die einerseits über eine Drossel 19 und ein Steuerventil 18 und andererseits über ein weiteres Steuerventil 16 und weitere Leitungen an die Gaskammer 41 angeschlossen ist. Durch entsprechende Betätigung der Steuerventile 16 und 18 kann somit das Gasrohr 9 gedrosselt und/oder ungedrosselt mit dem Spanngasraum des Vorratsbehälters 2 verbunden werden. Im allgemeinen dient der ungedrosselte Weg bei geöffnetem Steuerventil 16 zum Vorspannen der Flasche 1 vor dem Einlauf der Flüssigkeit sowie zum ungedrosselten Rückführen des aus der Flasche 1 beim Einlaufen der Flüssigkeit verdrängten Spanngases zurück in den Vorratsbehälter 2. Durch Abführen des Rückgases über die Drossel 19 durch Öffnen des Steuerventils 18 und Schließen des Steuerventils 16 kann das Abströmen des Spann- oder Rückgases gebremst und dadurch die Füllgeschwindigkeit verlangsamt werden.

Die Gaskammer 41 ist über weitere Leitungen und Steuerventile 20 bis 23 mit weiteren Behältern 24 bis 26 verbunden, die wiederum ringförmig ausgebildet und konzentrisch zur Drehachse 33 angeordnet sind. Die Behälter 24 bis 26 einschließlich der Steuerventile 20 bis 23 liegen weit ab vom Naßbereich und gut zugänglich überhalb des Vorratsbehälters 2 und laufen zusammen mit diesem um. Die zusätzlichen Behälter 24 bis 26 können je nach Art des Füllverfahrens beispielsweise Dampf enthalten, an eine Vakuumpumpe angeschlossen sein oder das während des Füllens aus der Flasche 1 verdrängte Rückgas aufnehmen. Die Steuerventile 20 bis 23 werden genauso wie die Steuerventile 28 und 31 durch eine elektronische Steuereinrichtung 12 zum vorbestimmten Zeitpunkt geöffnet und geschlossen. In der Zeichnung sind alle Steuerventile in geschlossenem Zustand dargestellt.

Im Inneren des Gasrohres 9 und dessen Verlängerung 15 ist eine stabförmige Füllstandssonde 10 angeordnet. Diese besteht im wesentlichen aus einem geradlinigen Drahtstück aus rostfreiem Stahl, das mit Ausnahme eines innerhalb des Gasrohres 9 befindlichen länglichen Meßbereichs durchgehend isoliert ist. Mittels nicht gezeigter Abstandshalter, die Teil des Isolationsmantels sind, wird die Füllstandssonde 10 mittig im Gasrohr 9 bzw. dessen Verlängerung 15 fixiert, so daß zwischen ihr und der Längsbohrung des Gasrohres 9 bzw. dessen Verlängerung 15 ein ausreichend großer ringförmiger Gaskanal verbleibt. Am oberen Ende weist die Füllstandssonde 10 eine zylindrische Verdickung 42 aus leitendem, mit einer Isolierschicht bedeckten Material auf, mittels der sie unter Mitwirkung eines nicht gezeigten Gewindestopfens lösbar und gasdicht in der ansonsten geschlossenen oberen Stirnseite der Verlängerung 15 befestigt ist. Nach Lösen des nicht gezeigten Gewindestopfens kann also die Füllstandssonde 10 nach oben hin aus dem Gasrohr 9 bzw. der Verlängerung 15 entfernt werden. Die Verdickung 42 ragt mit einem abisolierten oberen Endteil aus der Verlängerung 15 heraus, worauf ein elektrischer Kontaktstecker 43 mit einer zur Steuereinrichtung 12 führenden flexiblen Anschlußleitung 11 befestigt ist. Die elektrische Verbindung zwischen der Füllstandssonde 10 und der Steuereinrichtung 12 liegt somit weit entfernt vom Naßbereich an einer gut geschützten Stelle an der Oberseite des Vorratsbehälters 2. Auch der innerhalb des Gasrohres 9 bzw. der Verlängerung 15 liegende Bereich der Füllstandssonde 10 ist gut gegen Beschädigungen und Störungen geschützt.

Zwischen der Unterseite des Kontaktsteckers 43 und der Oberseite des Steuerblocks 39 ist konzentrisch zur Verlängerung 15 eine Druckfeder 44 angeordnet, die den Kontaktstecker 43 und damit die Verlängerung 15 einschließlich des Ventilkörpers 7 nach oben zu bewegen sucht. An der Oberseite des Kontaktsteckers 43 greift ein Stellorgan 13 in Form eines Pneumatikzylinders an, das an der Oberseite des Steuerblocks 39 befestigt ist. Auch das Stellorgan 13 wird durch die elektronische Steuereinrichtung 12 betätigt. In der in der Zeichnung dargestellten Phase ist das Stellorgan 13 mit Druckluft beaufschlagt, so daß sein Kolben über den Kontaktstecker 43 und die Verlängerung 15 den Ventilkörper 7 nach unten gegen seinen Ventilsitz drückt und damit das Flüssigkeitsventil 8 entgegen der Kraft der Feder 44 geschlossen hält.

Nach einer evtl. Vorbehandlung der Flasche 1 durch Dampf oder Vakuum mit Hilfe der Steuerventile 20 bis 23 und der Behälter 24 bis 26 wird allein das Steuerventil 16 geöffnet und das Stellorgan 13 entlüftet. Über das Gasrohr 9 strömt dann so lange Spanngas aus dem Vorratsbehälter 2 in die Flasche 1 ein, bis Gleichdruck herrscht, worauf die Feder 44 automatisch das Flüssigkeitsventil 8 öffnet und der Flüssigkeitseinlauf beginnt. Die Flüssigkeit strömt aus dem Vorratsbehälter 2 nahezu ungebremst durch die Öffnung 5, die Bohrung 4 und den Füllstutzen 3 in die Flasche 1 ein, wobei sie durch die spiralige Leitfläche 32 einen Drall erhält und daher an der Innenwand der Flasche 1 entlang läuft. Sobald der Füllstand in der Flasche 1 eine im Bereich der länglichen Meßzone der Füllstandssonde 10 liegende, vorbestimmte Höhe erreicht hat, spricht die Steuereinrichtung 12 an und löst durch Belüftung des Stellorgans 13 ein umgehendes Schließen des Flüssigkeitsventils 8 und ggf. des Steuerventils 16 oder 18 aus. Die Genauigkeit der Füllstandsmessung wird verbessert, wenn gegen Ende des Flüssigkeitseinlaufs durch die Steuereinrichtung 12 zeitgesteuert das Steuerventil 16 geschlossen und das Steuerventil 18 geöffnet und dadurch der Abfluß des Rückgases und damit zwangsläufig die Füllgeschwindigkeit gebremst wird.

## Patentansprüche

1. Vorrichtung zum Füllen von Gefäßen (1) mit einer Flüssigkeit aus einem Vorratsbehälter (2), an dem mindestens ein Füllstutzen (3) angeordnet ist, der über eine senkrechte Bohrung (4) mit dem Vorratsbehälter (2) verbunden ist, wobei in der Bohrung (4) der Ventilkörper (7) eines Flüssigkeitsventils (8) höhenbeweglich geführt ist, der von einem senkrechten Gasrohr (9) durchsetzt ist, in dessen Innerem zumindest teilweise eine elektrische Füllstandssonde (10) sitzt, die mit einer Steuereinrichtung (12) für ein auf den Ventilkörper (7) einwirkendes Stellorgan (13) verbunden ist, und das Gasrohr (9) fest mit dem Ventilkörper (7) verbunden ist,
dadurch gekennzeichnet, daß der Füllstutzen (3) an der Unterseite des Vorratsbehälters (2) angeordnet und über seine senkrechte Bohrung (4) mit einer Öffnung (5) im Boden (6) des Vorratsbehälters (2) verbunden ist, daß das Gasrohr (9) mit einer den Innenraum des Vorratsbehälters (2) und dessen Deckel (14) durchdringenden rohrförmigen Verlängerung (15) versehen ist, daß die elektrische Füllstandssonde (10) und/oder deren Anschlußleitung (11) durch die Verlängerung (15) hindurch verläuft und in dem aus dem Vorratsbehälter (2) herausragenden Bereich an die Steuereinrichtung (12) angeschlossen ist, daß die Verlängerung (15) höhenbeweglich und gasdicht im Deckel (14) des Vorratsbehälters (2) gelagert ist und daß das Stellorgan (13) für den Ventilkörper (7) des Flüssigkeitsventils (8) an der Oberseite des Vorratsbehälters (2) angeordnet ist und auf den aus diesem herausragenden Bereich der Verlängerung (15) des Gasrohres (9) einwirkt.

2. Vorrichtung nach Anspruch 1, dadurch gekennzeichnet, daß die Verlängerung (15) im wesentlichen den gleichen Querschnitt aufweist wie das Gasrohr (9).

3. Vorrichtung nach Anspruch 1 oder 2, dadurch gekennzeichnet, daß der Ventilkörper (7) des Flüssigkeitsventils (8) einstückig mit dem Gasrohr (9) und/oder dessen Verlängerung (15) ausgebildet ist.

4. Vorrichtung nach einem der Ansprüche 1 bis 3, dadurch gekennzeichnet, daß der aus dem Vorratsbehälter (2) herausragende Bereich der Verlängerung (15) des Gasrohres (9) über ein Steuerventil (16) und eine Spanngasleitung (17) an einen Spanngasbehälter angeschlossen ist.

5. Vorrichtung nach Anspruch 4, dadurch gekennzeichnet, daß die Spanngasleitung (17) in den oberen Bereich des Vorratsbehälters (2) einmündet.

6. Vorrichtung nach Anspruch 4 oder 5, dadurch gekennzeichnet, daß die Spanngasleitung (17) eine Abzweigung mit einer Drossel (19) aufweist, die über ein eigenes Steuerventil (18) mit der Verlängerung (15) des Gasrohres (9) verbunden ist.

7. Vorrichtung nach einem der Ansprüche 4 bis 6, dadurch gekennzeichnet, daß an den aus dem Vorratsbehälter (2) herausragenden Bereich der Verlängerung (15) des Gasrohres (9) über Leitungen und Steuerventile (20 bis 23) weitere Behälter (24 bis 26) für gasförmige oder flüssige Medien angeschlossen sind.

8. Vorrichtung nach einem der Ansprüche 1 bis 7, dadurch gekennzeichnet, daß in den Füllstutzen (3) ein Kanal (27) einmündet, der über ein Steuerventil (28) und eine Drossel (29) ins Freie oder in einen Behälter (30) führt.

9. Vorrichtung nach einem der Ansprüche 1 bis 8, dadurch gekennzeichnet, daß in den Füllstutzen (3) ein Kanal (27) einmündet, der über ein Steuerventil (31) mit einem Behälter (30) für ein gasförmiges oder flüssiges Medium verbunden ist.

10. Vorrichtung nach einem der Ansprüche 1 bis 9, dadurch gekennzeichnet, daß die senkrechte Bohrung (4) und der Ventilkörper (7) des Flüssigkeitsventils (8) im wesentlichen zylindrische Mantelbereiche aufweisen, wobei der Mantelbereich des Ventilkörpers (7) einen geringfügig kleineren Durchmesser aufweist als der Mantelbereich der Bohrung (4).

11. Vorrichtung nach Anspruch 10, dadurch gekennzeichnet, daß die zylindrischen Mantelbereiche der senkrechten Bohrung (4) und des Ventilkörpers (7) im wesentlichen gleich lang sind.

12. Vorrichtung nach Anspruch 10 oder 11, dadurch gekennzeichnet, daß am zylindrischen Mantelbereich des Ventilkörpers (7) mindestens eine spiralige Leitfläche (32) ausgebildet ist, durch welche der Ventilkörper (7) beweglich in der Bohrung (4) zentriert ist.

13. Vorrichtung nach einem der Ansprüche 1 bis 12, dadurch gekennzeichnet, daß am Boden (6) des Vorratsbehälters (2) mindestens ein Ventilblock (35) befestigt ist, der neben dem Füllstutzen (3) zumindest das Flüssigkeitsventil (8) enthält, daß am Deckel (14) des Vorratsbehälters (2) über dem Ventilblock (35) ein Steuerblock (39) befestigt ist, der zumindest ein Spanngasventil (16) enthält, und daß das Rückgasrohr (9) mit seiner Verlängerung (15) denn Steuerblock (39) mit dem Ventilblock (35) verbindet.

14. Vorrichtung nach Anspruch 13, dadurch gekennzeichnet, daß im Boden (6) und im Deckel (14) des Vorratsbehälters (2) konzentrisch übereinander liegende Öffnungen (5, 40) ausgebildet sind, an die sich der Ventilblock (35) bzw. der Steuerblock (39) anschließen.

## Claims

1. Apparatus for filling containers (1) with a liquid from a storage tank (2) on which there is disposed at least one filler neck (3) which is joined to the storage tank (2) via a vertical bore (4); the valve body (7) of a liquid valve (8) is set in the bore (4) so as to be able to move up and down, and running through the valve body (7) is a vertical gas pipe (9) in the interior of which is at least partly seated an electrical filling-level probe (10) which is linked to a control device (12) for an actuating means (13) operating on the valve body (7), and the gas pipe (9) is permanently joined to the valve body (7),
characterised in that the filler neck (3) is disposed on the lower face of the storage tank (2) and is connected via its vertical bore (4) to an opening (5) in the bottom (6) of the storage tank (2), that the gas pipe (9) is fitted with a tubular extension (15) which passes through the interior of the storage tank (2) and the cover (14) thereof, that the electrical filling-level probe (10) and/or the connecting lead (11) thereof passes through the extension (15) and is connected to the control device (12) in the portion that protrudes from the storage tank (2), that the extension (15) is mounted in gas-tight manner in the cover (14) of the storage tank (2) and is adapted to move up and down therein, and that the actuating means (13) for the valve body (7) of the liquid valve (8) is disposed on the upper face of the storage tank (2) and operates on the portion of the gas pipe (9) extension (15) that protrudes from the storage tank (2).

2. Apparatus according to claim 1, characterised in that the extension (15) has substantially the same cross-section as the gas pipe (9).

3. Apparatus according to claim 1 or 2, characterised in that the valve body (7) of the liquid valve (8) is constructed in one piece with the gas pipe (9) and/or the extension (15) thereof.

4. Apparatus according to any of claims 1 to 3, characterised in that the portion of the gas pipe (9) extension (15) that protrudes from the storage tank (2) is connected via a control valve (16) and a tension gas line (17) to a tank for tension gas.

5. Apparatus according to claim 4, characterised in that the tension gas line (17) opens into the upper portion of the storage tank (2).

6. Apparatus according to claim 4 or 5, characterised in that the tension gas line (17) incorporates a bifurcation with a flow restrictor (19) which is joined via its own control valve (18) to the gas pipe (9) extension (15).

7. Apparatus according to any of claims 4 to 6, characterised in that additional tanks (24 to 26) for gaseous or liquid media are connected via lines and control valves (20 to 23) to the portion of the gas pipe (9) extension (15) that protrudes from the storage tank (2).

8. Apparatus according to any of claims 1 to 7, characterised in that opening into the filler neck (3) is a channel (27) which leads via a control valve (28) and a flow restrictor (29) into the open or into a tank (30).

9. Apparatus according to any of claims 1 to 8, characterised in that opening into the filler neck (3) is a channel (27) which is joined via a control valve (31) to a tank (30) for a gaseous or liquid medium.

10. Apparatus according to any of claims 1 to 9, characterised in that the vertical bore (4) and the valve body (7) of the liquid valve (8) have substantially cylindrical casing portions, the casing portion of the valve body (7) being slightly smaller in diameter than the casing portion of the bore (4).

11. Apparatus according to claim 10, characterised in that the cylindrical casing portions of the vertical bore (4) and of the valve body (7) have substantially the same length.

12. Apparatus according to claim 10 or 11, characterised in that formed on the cylindrical casing portion of the valve body (7) is at least one spiral vane (32) which centres the valve body (7) movably in the bore (4).

13. Apparatus according to any of claims 1 to 12, characterised in that fixed to the bottom (6) of the storage tank (2) is at least one valve block (35) which in addition to the filler neck (3) contains at least the liquid valve (8), that fixed on the cover (14) of the storage tank (2) over the valve block (35) is a control block (39) which contains at least one tension gas valve (16), and that the return gas pipe (9) joins the control block (39) to the valve block (35) by means of its extension (15).

14. Apparatus according to claim 13, characterised in that formed in the bottom (6) and in the cover (14) of the storage tank (2) are openings (5, 40) situated concentrically over one another, to which the valve block (35) and the control block (39) are respectively connected.

## Revendications

1. Dispositif pour remplir des récipients (1) à l'aide d'un liquide provenant d'un réservoir (2) équipé d'au moins un tube de remplissage (3) relié au réservoir (2) par un perçage vertical (4), un organe d'obturation (7) d'une soupape à liquide (8) étant guidé mobile en hauteur dans le perçage (4), cet organe d'obturation étant traversé par un tube à gaz (9), vertical, ayant lui-même au moins partiellement, à l'intérieur, une sonde de niveau de remplissage (10), électrique, reliée à une installation de commande (12) d'un organe d'actionnement (13) agissant sur l'organe d'obturation (7) et le tube à gaz (9) est relié solidairement à l'organe obturateur (7), caractérisé en ce que le tube de remplissage (3) est prévu sur le côté inférieur du réservoir (2) et est relié par un perçage vertical (4) à une ouverture (5) du fond (6) du réservoir (2), le tube à gaz (9) étant muni d'un prolongement tubulaire (15) traversant le volume intérieur du réservoir (2) et son couvercle (14), la sonde de niveau de remplissage (10), électrique, et/ou sa ligne de branchement (11) traversant le prolongement (15) pour être reliées à l'installation de commande (12) dans la zone en saillie du réservoir (2), le prolongement (15) étant monté mobile en hauteur et de façon étanche au gaz dans le couvercle (14) du réservoir (2) et l'organe de commande (13) de l'organe d'obturation (7) de la soupape à liquide (8) étant prévu sur le côté supérieur du réservoir (2) en agissant sur le prolongement (15) du tube à gaz (9) sortant de cette zone.

2. Dispositif selon la revendication 1, caractérisé en ce que le prolongement (15) présente pratiquement la même section que le tube à gaz (9).

3. Dispositif selon la revendication 1 ou 2, caractérisé en ce que l'organe d'obturation (7) de la soupape à liquide (8) est réalisé en une seule pièce avec le tube à gaz (9) et/ou son prolongement (15).

4. Dispositif selon l'une des revendications 1 à 3, caractérisé en ce que la zone du prolongement (15) du tube à gaz (9) sortant du réservoir (2) est reliée à un réservoir de gaz sous pression par l'intermédiaire d'une soupape de commande (16) et d'une conduite de gaz sous pression (17).

5. Dispositif selon la revendication 4, caractérisé en ce que la conduite de gaz sous pression (17) débouche dans la zone supérieure du réservoir (2).

6. Dispositif selon la revendication 4 ou 5, caractérisé en ce que la conduite de gaz sous pression (17) comporte une dérivation avec un organe d'étranglement (19) reliée par sa propre soupape de commande (18) au prolongement (15) du tube à gaz (9).

7. Dispositif selon l'une des revendications 4 à 6, caractérisé en ce que la zone du prolongement (15) du tube à gaz (9) dépassant du réservoir (2) est reliée par des conduites et des soupapes de commande (20-23) à d'autres réservoirs (24-26) contenant des milieux à l'état gazeux ou liquide.

8. Dispositif selon l'une des revendications 1 à 7, caractérisé en ce qu'un canal (27) débouche dans le tube de remplissage (3), ce canal débouchant à l'air libre ou dans un réservoir (30) par l'intermédiaire d'une soupape de commande (28) et d'un organe d'étranglement (29).

9. Dispositif selon l'une des revendications 1 à 8, caractérisé en ce qu'un canal (27) débouche dans le tube de remplissage (3), ce canal étant relié à un réservoir (30) contenant un milieu gazeux ou liquide, par l'intermédiaire d'une soupape de commande (31).

10. Dispositif selon l'une des revendications 1 à 9, caractérisé en ce que le perçage vertical (4) et l'organe d'obturation (7) de la soupape à liquide (8) comportent des surfaces enveloppes essentiellement cylindriques, la surface enveloppe de l'organe d'obturation (7) ayant un diamètre légèrement inférieur à la surface enveloppe du perçage (4).

11. Dispositif selon la revendication 10, caractérisé en ce que la zone enveloppe cylindrique du perçage vertical (4) et de l'organe d'obturation (7) ont pratiquement la même longueur.

12. Dispositif selon la revendication 10 ou 11, caractérisé en ce qu'au moins une surface de guidage en spirale (32) est réalisée sur la zone enveloppe cylindrique de l'organe d'obturation (7), cette surface en spirale assurant le centrage mobile de l'organe d'obturation (7) dans le perçage (4).

13. Dispositif selon l'une des revendications 1 à 12, caractérisé en ce qu'au moins un bloc de soupape (35) est fixé au fond (6) du réservoir (2), ce bloc comportant, en plus du tube de remplissage (3), au moins une soupape à liquide (8), et un bloc de commande (39) est fixé au couvercle (14) du réservoir (2) par le bloc à soupape (35), ce bloc de commande comportant au moins une soupape à gaz sous pression (16) et le tube de retour de gaz (9) relie, par son prolongement (15), le bloc de commande (39) au bloc à soupape (35).

14. Dispositif selon la revendication 13, caractérisé en ce que des orifices (5, 40) superposés de manière concentrique sont prévus dans le fond (6) et dans le couvercle (14) du réservoir (2) auxquels sont reliés le bloc à soupape (35) ou le bloc de commande (39).
